# EUROPEAN PATENT APPLICATION

(11) **EP 4 563 583 A1**
(43) Date of publication of application: **04.06.2025**
(21) Application number: 22952248.7
(22) Date of filing: 26.07.2022
(51) Int. Cl.: C07F 9/09, C08F 214/18, C08F 114/20, C08F 14/18, C08F 2/40, C08F 114/18

(54) **REACTIVE FLUOROSURFACTANT, AND PREPARATION METHOD THEREFOR AND USE THEREOF**

(71) Applicant: Zhonghao Chenguang Research Institute of Chemical Industry Co., Ltd., Zigong, Sichuan 643201 (CN)
(72) Inventor: LIU, Bo, Zigong City, Sichuan 643201 (CN); XIAO, Zhongliang, Zigong City, Sichuan 643201 (CN); YU, Jinlong, Zigong City, Sichuan 643201 (CN); ZHONG, Ziqiang, Zigong City, Sichuan 643201 (CN); LIN, Zhoujun, Zigong City, Sichuan 643201 (CN); CHEN, Liyi, Zigong City, Sichuan 643201 (CN); LI, Hui, Zigong City, Sichuan 643201 (CN); TANG, Yi, Zigong City, Sichuan 643201 (CN)
(74) Representative: Haseltine Lake Kempner LLP
(86) International application number: PCT/CN2022/107936
(87) International publication number: WO 2024/020783

(57) **Abstract**

The present invention provides a reactive fluorosurfactant, and a preparation method therefor and a use thereof. The reactive fluorosurfactant is a polymer of which a main chain contains the following structural units: (A), (B), and (C). The reactive fluorosurfactant provided in the present invention has a good effect of reducing the surface tension of an aqueous phase system, and can be used in an aqueous emulsion polymerization method to prepare a fluoropolymer; moreover, the reactive fluorosurfactant participates in a polymerization reaction, and a fluoropolymer emulsion prepared by using the reactive fluorosurfactant is stable and has no phenomenon of emulsion breaking.

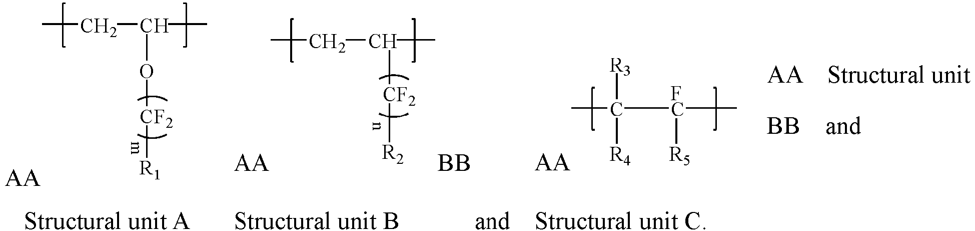

## Description

### FIELD OF THE INVENTION

The present application belongs to the technical field of chemical synthesis, and specifically relates to a reactive fluorosurfactant, preparation method therefor and use thereof.

### BACKGROUND OF THE INVENTION

Fluoropolymers have excellent heat resistance, chemical resistance, durability and weather resistance, etc. They are widely used in the fields such as chemical, petroleum, textile, food, paper, medicine, electronics and machinery. Such polymers mainly include polytetrafluoroethylene (PTFE), polyvinylidene fluoride (PVDF), polychlorotrifluoroethylene (PCTFE), polyvinyl fluoride (PVF), fluorinated ethylene propylene (FEP), and meltable polytetrafluoroethylene (PFA).

At present, industrial production of fluoropolymer is prepared by aqueous emulsion polymerization mainly using perfluorooctyl carboxylate (PFOA), perfluorooctyl sulfonate (PFOS) or derivatives thereof as surfactants. It is found recently that perfluorinated chain sulfonic acid (PFCS) and derivatives thereof with eight or more carbon atoms have bioaccumulation. Therefore, efforts are being made to phase out such compounds and to develop alternative surfactant for the preparation of fluoropolymer.

CN114031762A discloses a perfluoropolyether surfactant with a modified bioaccumulation profile. These alternative fluorosurfactants show lower bioaccumulation than perfluorinated alkanoic acids with eight or more carbon atoms, but they are still highly fluorinated compounds that are still bioaccumulative and do not meet the requirements of green chemistry for fluoropolymer development.

CN110573543A discloses a method for the preparation of a fluoropolymer dispersion using certain reactive oligo-dispersant having a given molecular weight, wherein the main chain of the reactive oligo-dispersant comprises repeating units derived from one or more alkene-bonded unsaturated monomers, comprises at least one iodine atom or bromine atom, comprises a plurality of ionizable groups selected from the group consisting of -SO₃Xₐ, -PO₃Xₐ, and -COOXₐ, wherein Xₐ is H, an ammonium group, or a monovalent metal. However, such a reactive oligo-dispersant is not easy to prepare and has poor emulsification effect, which still needs to be improved.

### SUMMARY OF THE INVENTION

In view of the deficiencies of the related technology, it is an object of the present invention to provide a reactive fluorosurfactant and a preparation method therefor and use thereof. The reactive fluorosurfactant has a good effect of lowering the surface tension of an aqueous phase system, and can be used in the preparation of fluoropolymer by aqueous emulsion polymerization method, and it will participate in the polymerization reaction, and the fluoropolymer emulsion prepared by the reactive fluorosurfactant is stable without demulsification phenomenon.

To achieve this, the present invention utilizes the following technical solutions.

In a first aspect, the present invention provides a reactive fluorosurfactant, the reactive fluorosurfactant is a polymer comprising the following structural units in its main chain: 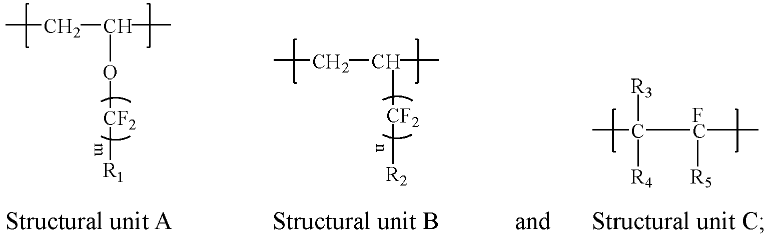
wherein R₁ is 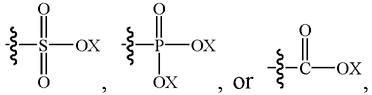 and each X is independently an H atom, NH₄⁺, or a monovalent metal ion;
R₂ is a Br atom or an I atom;
R₃ and R₄ are each independently an H atom, an F atom, or C₁-C₃ fluoroalkyl;
R₅ is an F atom, C₁-C₃ fluoroalkyl, or C₁-C₃ fluoroalkoxy;
m is an integer from 1 to 8 (e.g., 1, 2, 3, 4, 5, 6, 7, or 8); and
n is an integer from 1 to 6 (e.g., 1, 2, 3, 4, 5, or 6).

In the present invention, 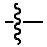 represents a connecting bond of a group.

The fluorosurfactant provided according to the present invention is a reactive surfactant, when used in the aqueous emulsion polymerization of a fluoropolymer, the fluorosurfactant can not only play a role of emulsification but also participate in the polymerization reaction of the fluoropolymer and become a part of the molecular chain of the fluoropolymer.

The structural formula of the reactive fluorosurfactant provided according to the present invention is shown as formula I below:

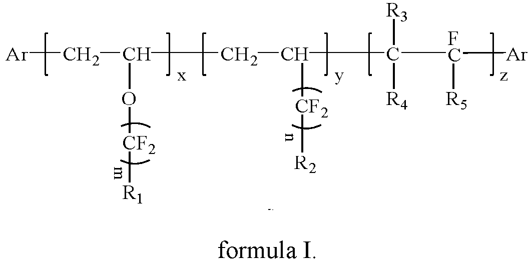

In formula I, Ar represents an end group, preferably a Br atom or an I atom. x, y, and z are the numbers of structural unit A, structural unit B, and structural unit C, respectively, the values of which can be calculated based on the molar ratios of structural unit A, structural unit B, and structural unit C and the molecular weight of the reactive fluorosurfactant.

It should be noted that since a copolymer formed by polymerization of a variety of monomers has different bonding manners such as alternating copolymerization, random copolymerization and block copolymerization, as well as different stereo configurations, which cannot be represented by a structural formula, formula I is only used to illustrate which structural units the molecular chain of the reactive fluorosurfactant is composed of, and does not represent the real structure of the reactive fluorosurfactant.

In some embodiments of the present invention, R₁ is

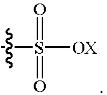

In some embodiments of the present invention, R₃ and R₄ are each independently an H atom or an F atom.

In some embodiments of the present invention, R₅ is an F atom, perfluoromethyl, or perfluoromethoxy.

In some embodiments of the present invention, the reactive fluorosurfactant is terminated by a Br atom or an I atom.

In some embodiments of the present invention, the structural unit A, structural unit B, and structural unit C have a molar ratio of (1.2 to 1.3):(0.6 to 1):(1.8 to 2.2); for example, it may be 1.2:0.6:1.8, 1.2:0.6:2, 1.2:0.6:2.2, 1.2:0.8:1.8, 1.2:0.8:2, 1.2:0.8:2.2, 1.2:1:1.8, 1.2:1:2, 1.2:1:2.2, 1.3:0.6:1.8, 1.3:0.6:2, 1.3:0.6:2.2, 1.3:0.8:1.8, 1.3:0.8:2, 1.3:0.8:2.2, 1.3:1:1.8, 1.3:1:2, or 1.3:1:2.2, etc.

In some embodiments of the present invention, the reactive fluorosurfactant has a molecular weight of 30,000 to 80,000; for example, it may be 30,000, 35,000, 40,000, 45,000, 50,000, 55,000, 60,000, 65,000, 70,000, 75,000, or 80,000, etc.

In some embodiments of the present invention, the monovalent metal ion is a sodium ion or a potassium ion.

In a second aspect, the present invention provides a preparation method for the reactive fluorosurfactant as described in the first aspect, and the preparation method comprises the following steps:
reacting 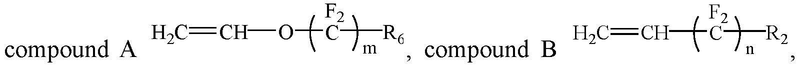 and compound C 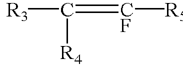 as raw materials in water in the presence of a chain transfer agent, an initiator, and an emulsifier, and
hydrolyzing at the end of the reaction to produce the reactive fluorosurfactant;
wherein R₆ is

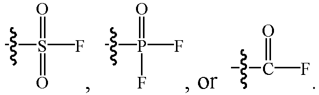

In compound A and compound B employed in the present invention, the atom attached to the double bond carbon is a hydrogen atom. Compared to compounds in which the atom connected to the double bond carbon is a fluorine atom, compound A and compound B employed in the present invention are easier to polymerize, the reaction rate is faster, and the emulsification effect of the surfactant prepared therefrom is better.

Compound C is preferably selected from one or more of tetrafluoroethylene (TFE), hexafluoropropylene (HFP), vinylidene fluoride (VDF) and perfluoromethyl vinyl ether (PMVE).

In some embodiments of the present invention, the chain transfer agent is diiodoperfluoroalkane or a dibromoperfluoroalkane. For example, the chain transfer agent may be one or more of I(CF₂)₃I, I(CF₂)₄I, I(CF₂)₅I, I(CF₂)₆I, Br(CF₂)₃Br, Br (CF₂)₄Br, Br (CF₂)₅Br, and Br(CF₂)₆Br.

In some embodiments of the present invention, the chain transfer agent is used in an amount of 0.3 to 0.8%, for example 0.3%, 0.35%, 0.4%, 0.45%, 0.5%, 0.55%, 0.6%, 0.65%, 0.7%, 0.75%, or 0.8%, etc., of the total mass of the compound A, compound B, and compound C.

In some embodiments of the invention, the initiator is selected from one or more of ammonium persulfate, sodium persulfate, potassium persulfate, di-tert-butyl peroxide, and dibenzoyl peroxide.

In some embodiments of the present invention, the initiator is used in an amount of 0.15 to 0.5%, for example 0.15%, 0.2%, 0.25%, 0.3%, 0.35%, 0.4%, 0.45%, or 0.5%, etc., of the total mass of the compound A, compound B, and compound C.

In some embodiments of the present invention, the emulsifier is polyethylene oxide-polypropylene oxide-polyethylene oxide block copolymer emulsifier or polyethylene glycol octyl phenyl ether emulsifier.

In some embodiments of the present invention, the emulsifier is used in an amount of 0.05 to 0.3%,for example, 0.05%, 0.08%, 0.1%, 0.12%, 0.15%, 0.18%, 0.2%, 0.22%, 0.25%, 0.28%, or 0.3%, etc., of the total mass of the compound A, compound B, and compound C.

In some embodiments of the present invention, the reaction is carried out at a temperature of 60 to 120°C; for example, the temperature may be 60°C, 70°C, 80°C, 90°C, 100°C, 110°C, or 120°C, etc.

In some embodiments of the present invention, the reaction is carried out at a pressure of 0.8 to 1.5 MPa; for example, the pressure may be 0.8 MPa, 0.9 MPa, 1 MPa, 1.1 MPa, 1.2 MPa, 1.3 MPa, 1.4 MPa, or 1.5 MPa, etc.

In some embodiments of the present invention, the reaction is carried out for 2 to 6 h; for example, the time may be 2 h, 2.5 h, 3 h, 3.5 h, 4 h, 4.5 h, 5 h, 5.5 h, or 6 h, etc.

In some embodiments of the present invention, the hydrolysis is carried out in an alkaline solution (which may be, for example, ammonia, sodium hydroxide, or potassium hydroxide).

In some embodiments of the present invention, the preparation method for the reactive fluorosurfactant may further comprise a purification operation to obtain a pure non-fluorosurfactant product. The present invention has no specific limitation on the method of purification. Exemplarily, the reactive fluorosurfactant may be obtained by separating the organic phase solution after hydrolysis, followed by drying with anhydrous sodium sulfate, filtration, and rotary evaporation.

In a third aspect, the present invention provides use of the reactive fluorosurfactant as described in the first aspect in the preparation of fluoropolymer by aqueous emulsion polymerization.

In a fourth aspect, the present invention provides a preparation method for a fluoropolymer, the preparation method comprises: subjecting a fluorine-containing monomer to aqueous emulsion polymerization in an aqueous phase comprising the reactive fluorosurfactant as described in the first aspect to produce the fluoropolymer.

In some embodiments of the present invention, the reactive fluorosurfactant is used in an amount of 0.02 to 0.06%, for example 0.02%, 0.03%, 0.04%, 0.05%, or 0.06%, etc., of the mass of the fluoropolymer.

In some embodiments of the present invention, the fluorine-containing monomer is selected from one or more of tetrafluoroethylene, hexafluoropropylene, vinyl fluoride, vinylidene fluoride, trifluoroethylene, and chlorotrifluoroethylene.

In a fifth aspect, the present invention provides a fluoropolymer, prepared by the preparation method described in the fourth aspect.

The present invention has the following beneficial effects as compared to related technologies:
The reactive fluorosurfactant provided according to the present invention has a good effect of reducing the surface tension of an aqueous phase system, and can dramatically lower the surface tension of the aqueous phase at a low concentration, which can be used for the preparation of fluoropolymer by aqueous emulsion polymerization method, and the reactive fluorosurfactant will participate in the polymerization reaction, and the fluoropolymer emulsion prepared by the reactive fluorosurfactant is stable without demulsification phenomenon.

### DETAILED DESCRIPTION OF THE EMBODIMENTS

The technical solution of the present invention is further described below by way of specific embodiments. It should be apparent to those skilled in the art that the specific embodiments described are merely an aid to understanding the invention and should not be regarded as a specific limitation of the invention.

Some of the sources of raw materials used in Examples of the present invention are as follows:
Polyethylene oxide-polypropylene oxide-polyethylene oxide block copolymer emulsifier: Pluronic 31R1 from BASF AG.

### Example 1

The present example provides a reactive fluorosurfactant, which is prepared as follows.

1.9 kg of deionized water, 1176 g of CH₂=CH-O-CF₂-SO₂F, 9.6 g of I(CF₂)₃I, 1016 g of CH₂=CHCF₂CF₂I, and 3.2 g of Pluronic 31R1 were added to a 5 L reactor; the stirring speed was controlled to 650 rpm, and the temperature of the reactor was raised to 80°C. After three times of nitrogen displacements, the reactor was fed with TFE monomer to a pressure of 1.2 MPa (the pressure was maintained by continuously feeding TFE during the reaction), and added with 4.8 g of potassium persulfate (in the form of 1.6 wt% aqueous solution) to initiate the reaction; the reaction was terminated when the consumed mass of TFE reached 1,000 g, and the polymer emulsion was obtained via evacuation. The polymer emulsion obtained above was heated to 90°C in a glass container, and 0.12 mol NaOH (in the form of 5wt% aqueous solution) was added dropwise to the glass container, 30 minutes later the NaOH solution was continually added to a total amount of 2.4 mol of NaOH; the organic phase was separated after 2 h of resting, and the solution of the organic phase was dried with anhydrous sodium sulfate. Finally, after filtration and rotary evaporation, the reactive fluorosurfactant D1 was obtained, and the number average molecular weight was determined to be 35,000; the surface tension was tested by adding D1 in ion-free water, and the surface tension of D1 with a mass concentration of 100 ppm was 15.62 mN/m.

### Example 2

The present example provides a reactive fluorosurfactant, which is prepared as follows.

1.9 kg of deionized water, 1703 g of CH₂=CH-O-CF₂CF₂-SO₂F, 27.8 g of I(CF₂)₄I, 1016 g of CH₂=CHCF₂CF₂Br, and 10.4 g of Pluronic 31R1 were added to a 5 L reactor; the stirring speed was controlled to 650 rpm, and the temperature of the reactor was raised to 60°C. After three times of nitrogen displacements, the reactor was fed with VDF monomer to a pressure of 1.0 MPa (the pressure was maintained by continuously feeding VDF during the reaction), and added with 10.4 g of potassium persulfate (in the form of 1.6 wt% aqueous solution) to initiate the reaction; the reaction was terminated when the consumed mass of VDF in the reaction reached 704 g, and the polymer emulsion was obtained via evacuation. The polymer emulsion obtained above was heated to 90°C in a glass container, and 0.12 mol NaOH (in the form of 5wt% aqueous solution) was added dropwise to the glass container, 30 minutes later the NaOH solution was continually added to a total amount of 2.4 mol of NaOH; the organic phase was separated after 2 h of resting, and the solution of the organic phase was dried with anhydrous sodium sulfate. Finally, after filtration and rotary evaporation, the reactive fluorosurfactant D2 was obtained, and the number average molecular weight was determined to be 42000; the surface tension was tested by adding D2 in ion-free water, and the surface tension of D2 with a mass concentration of 100 ppm was 15.24 mN/m.

### Example 3

The present example provides a reactive fluorosurfactant, which is prepared as follows.

1.9 kg of deionized water, 1806 g of CH₂=CH-O-CF₂CF₂CF₂-SO₂F, 18.5g of I(CF₂)₄I, 1239 g of CH₂=CHCF₂CF₂CF₂CF₂CF₂I, and 9.2 g of Pluronic 31R1 were added to a 5 L reactor; the stirring speed was controlled to 650 rpm, and the temperature of the reactor was raised to 110°C. After three times of nitrogen displacements, the reactor was fed with PMVE monomer to a pressure of 1.4 Mpa (the pressure was maintained by continuously feeding PMVE during the reaction), and added with 9.2g of potassium persulfate (in the form of 1.6wt% aqueous solution) to initiate the reaction; the reaction was terminated when the consumed mass of PMVE reached 1577 g, and the polymer emulsion was obtained via evacuation. The polymer emulsion obtained above was heated to 90°C in a glass container, and 0.12 mol NaOH (in the form of 5wt% aqueous solution) was added dropwise to the glass container, 30 minutes later the NaOH solution was continually added to a total amount of 2.4 mol of NaOH; the organic phase was separated after 2 h of resting, and the solution of the organic phase was dried with anhydrous sodium sulfate. Finally, after filtration and rotary evaporation, the reactive fluorosurfactant D3 was obtained, and the number average molecular weight was determined to be 62000; the surface tension was tested by adding D3 in ion-free water, and the surface tension of D3 with a mass concentration of 100 ppm was 16.34 mN/m.

### Example 4

The present example provides a reactive fluorosurfactant, which is prepared as follows.

1.9 kg of deionized water, 1819 g of CH₂=CH-O-CF₂CF₂CF₂-SO₂F, 20.4 g of I(CF₂)₅I, 912 g of CH₂=CHCF₂CF₂CF₂I, and 6.1 g of Pluronic 31R1 were added to a 5 L reactor; the stirring speed was controlled to 650 rpm, and the temperature of the reactor was raised to 120 °C. After three times of nitrogen displacements, the reactor was fed with HFP monomer to a pressure of 1.5 MPa (the pressure was maintained by continuously feeding HFP during the reaction), and added with 20.4 g of potassium persulfate (in the form of 1.6 wt% aqueous solution) to initiate the reaction; the reaction was terminated when the consumed mass of HFP reached 1,350 g, and the polymer emulsion was obtained via evacuation. The polymer emulsion obtained above was heated to 90°C in a glass container, and 0.12 mol NaOH (in the form of 5wt% aqueous solution) was added dropwise to the glass container, 30 minutes later the NaOH solution was continually added to a total amount of 2.4 mol of NaOH; the organic phase was separated after 2 h of resting, and the solution of the organic phase was dried with anhydrous sodium sulfate. Finally, after filtration and rotary evaporation, the reactive fluorosurfactant D4 was obtained, and the number average molecular weight was determined to be 53000; the surface tension was tested by adding D4 in ion-free water, and the surface tension of D4 with a mass concentration of 100 ppm was 16.62 mN/m.

### Comparative Example 1

The present comparative example provides a reactive fluorosurfactant, the preparation method for which differs from Example 1 only in that the compound CH₂=CH-O-CF₂-SO₂F is replaced with an equimolar amount of CF₂=CF-O-CF₂-SO₂F, and the compound CF₂=CFCF₂CF₂I is replaced with an equimolar amount of CH₂=CHCF₂CF₂I to obtain the dispersant D5; the surface tension was tested by adding D5 in ion-free water, and the surface tension of D5 with a mass concentration of 100 ppm was 28.43 mN/m.

### Comparative Example 2

Dispersant D6 in the present comparative example was prepared according to the method disclosed in Preparation Example 1 of CN110573543A. The surface tension was tested by adding D6 in ion-free water, and the surface tension of D6 with a mass concentration of 100 ppm was 22.64 mN/m.

### Application Examples 1 to 4

In Application Examples 1 to 4, polytetrafluoroethylene was prepared using the reactive fluorosurfactants provided in Examples 1 to 4, respectively, and the steps are as follows.

20 kg of deionized water was added to a 50 L reactor, and the reactor was evacuated and replaced with N₂ until the oxygen content thereof was ≤ 30ppm. 4 g of the reactive fluorosurfactant provided in Examples 1 to 4 respectively was added into the reactor; the reactor was heated to 80°C, fed with tetrafluoroethylene until the pressure inside the reactor reached 1.2 MPa, and 150 mL of solution containing 6 g/L potassium persulfate was added to initiate the reaction, and the pressure inside the reactor was maintained at 1.2 MPa by continuously feeding tetrafluoroethylene during the reaction. The reaction was terminated after 6 kg of tetrafluoroethylene was added, the reactor was cooled down to room temperature, the unreacted monomer was discharged, and the emulsion was released, and no signs of condensation or sedimentation of the emulsion were observed. The stability of the emulsion was tested according to the GB/T1603-2001 test standard, and the test results are shown in Table 1.

### Application Examples 5 to 8

In Application Examples 5 to 8, fluorinated rubber was prepared using the reactive fluorosurfactants provided in Examples 1 to 4, respectively, and the steps are as follows.

20 kg of deionized water was added to a 50 L reactor, and the reactor was evacuated and replaced with N₂ until the oxygen content thereof was ≤ 30ppm. 8 g of the reactive fluorosurfactant provided in Examples 1 to 4 respectively and 60 g of bromotrifluoroethylene were added to the reactor; the reactor was heated to 95°C, fed with the initial mixed monomer of vinylidene fluoride, tetrafluoroethylene, and hexafluoropropylene (the molar ratio of vinylidene fluoride, tetrafluoroethylene, and hexafluoropropylene was 40:25:35) until the pressure inside the reactor reached 2.0 MPa, and 15 g of potassium persulfate and 30 g of diiodomethane were added to initiate the reaction, and the pressure inside the reactor was maintained at 2.0 ± 0.3 MPa by continuously feeding a mixture of vinylidene fluoride, tetrafluoroethylene and hexafluoropropylene (the molar ratio of vinylidene fluoride, tetrafluoroethylene and hexafluoropropylene was 45:20:35), and at the same time, potassium persulfate solution with a mass concentration of 3.18% was continually added at the rate of 50g/10min. When the solid content of the emulsion reached 30%, the reaction was terminated, the unreacted monomer was recovered and the emulsion was released, and no signs of condensation or sedimentation of the emulsion were observed. The stability of the emulsion was tested according to the GB/T1603-2001 test standard, and the test results are shown in Table 2.

### Application Comparative Examples 1 to 2

In the Application Comparative Examples 1 to 2, polytetrafluoroethylene was prepared using the surfactants provided by Comparative Examples 1 to 2, respectively, and the steps differ from the Application Example 1 only in that the reactive fluorosurfactant provided in Example 1 was replaced with the same mass of surfactants provided by Comparative Examples 1 to 2, respectively, and the stability of the emulsion was tested according to the GB/T1603-2001 test standard, and the test results are as shown in Table 1.

### Application Comparative Examples 3 to 4

In the Application Comparative Examples 3 to 4, fluoropolymer was prepared using the surfactants provided by the Comparative Examples 1 to 2, respectively, and the steps differ from the Application Example 5 only in that the reactive fluorosurfactant provided in Example 1 was replaced with the same mass of surfactants provided by the Comparative Examples 1 to 2, respectively, and the stability of the emulsion was tested according to the GB/T1603-2001 test standard, and the test results are as shown in Table 2.

**Table 1. The performance test results of polytetrafluoroethylene**

| No. | Surfactant | Emulsion stabilization time/s |
|---|---|---|
| Application Example 1 | D1 | 560±8 |
| Application Example 2 | D2 | 530±6 |
| Application Example 3 | D3 | 520±8 |
| Application Example 4 | D4 | 490±6 |
| Application Comparative Example 1 | D5 | 450±6 |
| Application Comparative Example 2 | D6 | 420±10 |

**Table 2. The performance test results of rubber emulsion**

| No. | Surfactant | Emulsion stabilization time/s |
|---|---|---|
| Application Example 5 | D1 | 680±6 |
| Application Example 6 | D2 | 650±8 |
| Application Example 7 | D3 | 630±8 |
| Application Example 8 | D4 | 660±6 |
| Application Comparative Example 3 | D5 | 580±10 |
| Application Comparative Example 4 | D6 | 560±8 |

As can be seen from the results of above surface tension test, as well as the results of stability test in Tables 1 and 2, the surfactant provided according to the present invention has a good effect of lowering the surface tension of an aqueous phase system, and can be used in the aqueous emulsion polymerization of fluoropolymer, and the stability of the emulsion formed is good. Among them, the dispersants prepared without using the monomers of the present invention in the Comparative Examples 1 to 2 have significantly higher surface tension at the same concentration, and the polymer emulsions prepared with the dispersants were less stable.

Although, the present invention has been described in detail above with general description, specific embodiments and tests, some modifications or improvements can be made on the basis of the present invention, as will be obvious to those skilled in the art. Therefore, these modifications or improvements made without departing from the spirit of the present invention fall within the scope of the claimed protection of the present invention.

## Claims

1. A reactive fluorosurfactant, **characterized in that** the reactive fluorosurfactant is a polymer containing the following structural units in its main chain: 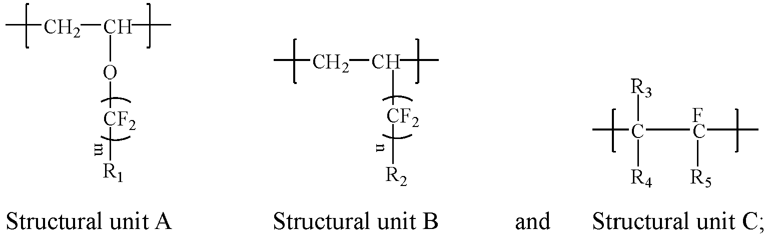
wherein, R₁ is 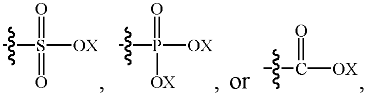
and each X is independently an H atom, NH₄⁺, or a monovalent metal ion;
R₂ is a Br atom or an I atom;
R₃ and R₄ are each independently an H atom, an F atom, or C₁-C₃ fluoroalkyl;
R₅ is an F atom, C₁-C₃ fluoroalkyl, or C₁-C₃ fluoroalkoxy;
m is an integer from 1 to 8, and n is an integer from 1 to 6.

2. The reactive fluorosurfactant according to claim 1, wherein, R₁ is 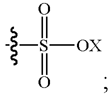
preferably, R₃ and R₄ are each independently an H atom or an F atom;
preferably, R₅ is an F atom, perfluoromethyl, or perfluoromethoxy;
preferably, the reactive fluorosurfactant is terminated by a Br atom or an I atom.

3. The reactive fluorosurfactant according to claim 1 or 2, wherein, the structural unit A, structural unit B, and structural unit C have a molar ratio of (1.2 to 1.3):(0.6 to 1):(1.8 to 2.2);
preferably, the reactive fluorosurfactant has a molecular weight of 30,000 to 80,000.

4. The reactive fluorosurfactant according to any one of claims 1 to 3, wherein, the monovalent metal ion is a sodium ion or a potassium ion.

5. A preparation method for the reactive fluorosurfactant according to any one of claims 1 to 4, wherein, the preparation method comprises the following steps:
reacting 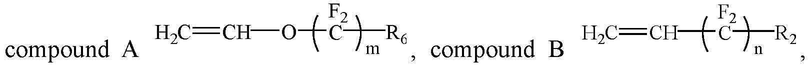
and 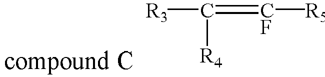
as raw materials in water in the presence of a chain transfer agent, an initiator and an emulsifier, and
hydrolyzing at the end of the reaction to produce the reactive fluorosurfactant;
wherein R₆ is

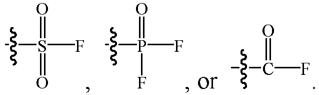

6. The preparation method according to claim 5, wherein the chain transfer agent is diiodoperfluoroalkane or dibromoperfluoroalkane;
preferably, the chain transfer agent is used in an amount of 0.3 to 0.8% of the total mass of the compound A, compound B, and compound C;
preferably, the initiator is selected from one or more of ammonium persulfate, sodium persulfate, potassium persulfate, di-tert-butyl peroxide, and dibenzoyl peroxide;
preferably, the initiator is used in an amount of 0.15 to 0.5% of the total mass of the compound A, compound B, and compound C;
preferably, the emulsifier is polyethylene oxide-polypropylene oxide-polyethylene oxide block copolymer emulsifier or polyethylene glycol octyl phenyl ether emulsifier;
preferably, the emulsifier is used in an amount of 0.05 to 0.3% of the total mass of the compound A, compound B, and compound C.

7. The preparation method according to claim 5 or 6, wherein, the reaction is carried out at a temperature of 60 to 120°C;
preferably, the reaction is carried out at a pressure of 0.8 to 1.5 MPa;
preferably, the reaction is carried out for 2 to 6 h.

8. Use of the reactive fluorosurfactant according to any one of claims 1 to 4 in the preparation of a fluoropolymer by aqueous emulsion polymerization.

9. A preparation method for a fluoropolymer, **characterized in that** the preparation method comprises: subjecting a fluorine-containing monomer to aqueous emulsion polymerization in an aqueous phase comprising the reactive fluorosurfactant according to any one of claims 1 to 4, to produce the fluoropolymer;
preferably, the reactive fluorosurfactant is used in an amount of 0.02 to 0.06% of the mass of the fluoropolymer;
preferably, the fluorine-containing monomer is selected from one or more of tetrafluoroethylene, hexafluoropropylene, vinyl fluoride, vinylidene fluoride, trifluoroethylene, and chlorotrifluoroethylene.

10. A fluoropolymer, **characterized in that** the fluoropolymer is prepared by the preparation method according to claim 9.
